# EUROPÄISCHE PATENTSCHRIFT

(11) **EP 0 653 111 B1**
(45) Veröffentlichungstag und Bekanntmachung des Hinweises auf die Patenterteilung: **18.09.1996**
(21) Anmeldenummer: 93915646.9
(22) Anmeldetag: 20.07.1993
(51) Int. Cl.: H02H 11/00, H04B 3/54

(54) **VERPOLSCHUTZ MIT VERMINDERTER ELEMENTFLÄCHE EINES VERPOLUNGSSCHUTZELEMENTES**
REVERSE-POLARITY PROTECTION BY MEANS OF A PROTECTING ELEMENT HAVING A REDUCED SURFACE
PROTECTION CONTRE LES INVERSIONS DE POLARITE A L'AIDE D'UN ELEMENT DE PROTECTION A SURFACE REDUITE

(30) Priorität: 31.07.1992 DE 4225457
(43) Veröffentlichungstag der Anmeldung: 17.05.1995
(73) Patentinhaber: SIEMENS AKTIENGESELLSCHAFT, 80333 München (DE)
(72) Erfinder: ZIERHUT, Hermann, D-81739 München (DE)
(86) Internationale Anmeldenummer: DE9300639
(87) Internationale Veröffentlichungsnummer: WO9403956

(56) Entgegenhaltungen:
- EP-A- 0 379 902
- EP-A- 0 487 759

## Beschreibung

Die Erfindung bezieht sich auf einen Verpolschutz zur Ankopplung einer elektrischen Schaltung an ein Energie und Information führendes Leitersystem, wobei wenigstens ein Ankopplungspfad ein steuerbares Element als Verpolschutz umfaßt. Ein derartiger Verpolschutz ist bekannt (EP-A-0 487 759). Das Verpolungsschutzelement benötigt hierbei eine verhältnismäßig große Elementfläche, also bei üblichem Halbleitermaterial entsprechend große Siliciumfläche.

Der Erfindung liegt die Aufgabe zugrunde, den bekannten Verpolschutz so zu verbessern, daß beim Verpolungsschutzelement die Elementfläche wesentlich vermindert werden kann.

Die Lösung der geschilderten Aufgabe erfolgt nach der Erfindung durch einen Verpolschutz nach Patentanspruch 1 oder nach Patentanspruch 2. Bei induktiver Ankopplung einer Sendeschaltung an das Leitersystem mittels eines Wandlers wird der Arbeitsstrom, der über die Wicklung auf der Sendeseite fließt, - also auf der zum Leitersystem abgewandten Wandlerseite -, über die Steuerelektrode des steuerbaren Elementes, des Verpolungsschutzelementes, geleitet. Bei einem Übersetzungsverhältnis des Wandlers von beispielsweise 3 : 1, senderseitige Wicklung zur Seite des Leitersystems, ist der Strom durch die Wandlerwicklung auf der Senderseite entsprechend vermindert, im Beispiel auf 1/3.

Entsprechend kann das Verpolungsschutzelement bis zu einer Verstärkung B von beispielsweise drei ausgefahren werden. Die Verstärkung ist hierbei definiert als Quotient aus Kollektorstrom zu Basisstrom.

Inbesondere kann der Verpolschutz zur Ankopplung einer elektrischen Schaltung an ein Gleichstromenergie und Wechselspannungsinformation führendes Leitersystem dienen. Hierbei umfaßt wenigstens ein Ankopplungspfad ein steuerbares Element als Verpolschutz, wozu dieses Verpolungsschutzelement in Abhängigkeit von der Polarität des Leitersystems den Ankopplungspfad sperrt bzw. freigibt. Wesentlich ist, daß bei induktiver Ankopplung einer Sendeschaltung an das Leitersystem durch einen Wandler, der in Verbindung mit einem Kondensator als Weiche für Gleichstromenergie und für Wechselspannungsinformation dient, der Arbeitsstrom der als Sendewicklung dienenden Wicklung des Wandlers über die Steuerelektrode des steuerbaren Elementes geleitet ist. Hierbei ist der Kondensator in der Leitung angeordnet, in deren Zug eine Arbeitselektrode, beispielsweise der Emitter, des Verpolungsschutzelements liegt. Eine Leitung für den Signalstrom des Senders ist zur Steuerelektrode des Verpolungsschutzelementes geführt. Der Arbeitsstrom über die senderseitige Wicklung wird also auch hierbei über die Steuerelektrode des Verpolungsschutzelements geleitet. Im Zuge der Arbeitselektroden liegt zwischen energieführenden Leitungen der Kondensator. Infolge der verminderten Ströme der senderseitigen Wicklung, die über die Steuerelektrode des Verpolungsschutzelements geleitet werden, ist der Flächenbedarf bei dem Element des Verpolungsschutzelements entsprechend vermindert.

Nach einer Weiterbildung ist das Verpolungsschutzelement als symmetrischer Doppel-Emitter-Transistor ausgeführt, dessen Steuereingang außer an die Leitung für Sendestrom des an eine Ansteuerschaltung gelegt ist. Ein derartiger Doppel-Emitter-Transistor ermöglicht bei entsprechender Beschaltung auf der Senderseite einen Energiefreilauf in den Pausen des Sendesignals, und zwar ohne weitere Beschaltung am Verpolungsschutzelement. Ein derartiger Doppel-Emitter-Transistor kann bei vielfältigen schaltkreistechnisch entsprechenden Aufgabenstellungen vorteilhaft eingesetzt werden. Derartige Ausführungen eignen sich besonders zur Integration in einem IC.

Die Erfindung soll nun anhand von in der Zeichnung grob schematisch wiedergegebenen Ausführungsbeispielen näher erläutert werden:
In FIG 1 ist ein erstes Ausführungsbeispiel und in FIG 2 ein weiteres Ausführungsbeispiel veranschaulicht.

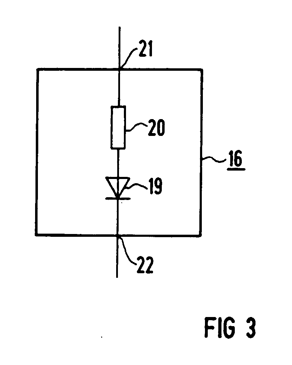

In FIG 3 ist eine einfache Ausführung für die Ansteuerschaltung wiedergegeben.

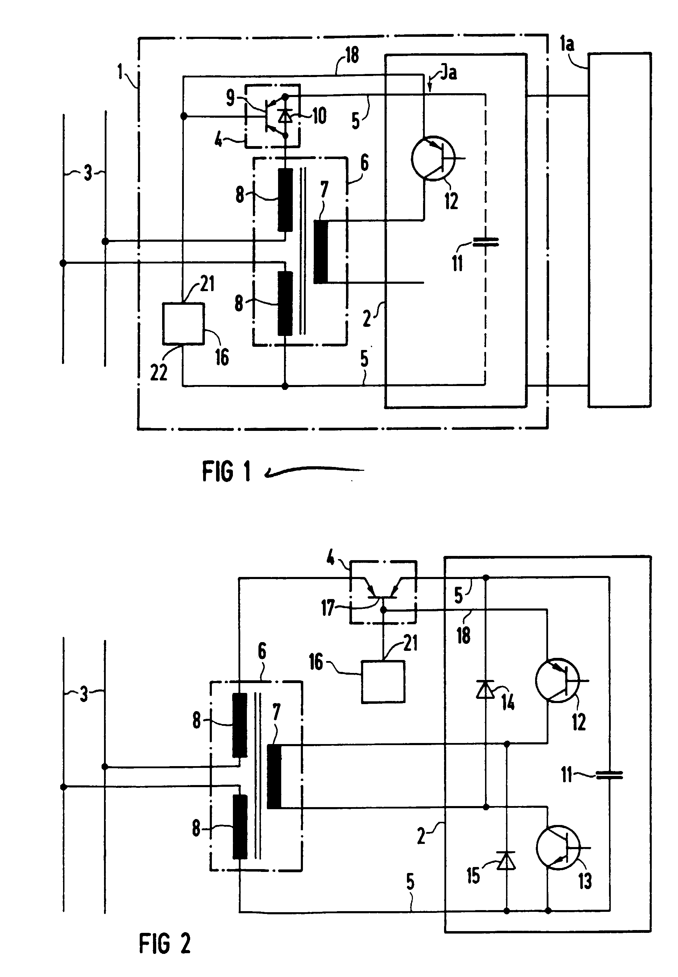

In FIG 1 ist ein Verpolschutz veranschaulicht. Eine Ankopplungsschaltung 1 zum Ankoppeln von Teilnehmerschaltungen la an ein Leitersystem 3, beispielsweise einen Busleiter weist eine elektrische Schaltung 2 auf, die mit einem Verpolungsschutzelement 4 versehen ist. Das Verpolungsschutzelement 4 sorgt dafür, daß in Abhängigkeit von der Polarität des Leitersystems 3 der Ankopplungspfad 5 gesperrt bzw. freigegeben wird. Im Ausführungsbeispiel kann die Schaltung 2 als Sendeschaltung verstanden werden, die an das Leitersystem 3 durch einen Wandler 6 induktiv angekoppelt ist. In Verbindung mit einem Kondensator 11 dient der Wandler 6 als Weiche für Gleichstromenergie und für Wechselspannungsinformation, die über das Leitersystem 3 übertragen werden. Über die Primärseite 7 des Wandlers 6 wird der Sendestrom geleitet. Die dem Leitersystem 3 zugewandten Sekundärwicklungen 8 lassen an den beiden Seiten des Kondensators 11 Gleichstromenergie zur Bordnetzversorgung der Ankopplungsschaltung 1 abnehmen. Wenn das Verpolungsschutzelement 4 beim Anschließen der Ankopplungsschaltung 1 an das Leitersystem 3 infolge falscher Anschlußrichtung und entsprechend falscher Polarität sperrt, unterbleibt die Bordnetzversorgung und somit ein Betrieb der Ankopplungsschaltung, ohne daß für das Leitersystem 3 kurzschließende Rückwirkungen entstehen könnten. Das Leitersystem 3 wird also bei polungsverkehrtem Anschluß einer Ankopplungsschaltung nicht belastet. Im Ausführungsbeispiel besteht das Verpolungsschutzelement 4 aus einem Transistor 9 und einem parallelen Ventil 10, das auch durch einen zweiten antiparallel geschalteten Transistor gebildet werden kann. Die Sendeleistung wird von einem Sendeventil 12 gesteuert. Der Arbeitsstrom des Sendeventils 12 wird über einen weiteren Ankopplungspfad 18 auf die Steuerelektrode des Verpolungsschutzelementes geleitet. Auf diese Steuerelektrode arbeitet auch eine Ansteuerschaltung 16.

Die Ansteuerschaltung 16 ist dafür ausgelegt, daß sie je nach Betriebszustand, z.B. Empfangen oder Senden oder hoher Gleichstrombedarf für das Bordnetz, dem Verpolungsschutzelement 4 einen entsprechenden Ansteuerstrom zuführt. Es sei angenommen, daß im normalen Empfangsbetriebszustand über das Verpolungsschutzelement 4 ein Strom von einigen Milliampere fließt, beispielsweise von 10 Milliampere. Bei Sendebetrieb fließt dann ein Strom in der Größenordnung von beispielsweise + 0,3 Ampere. Hierfür ist ein erheblich größerer Steuerstrom für das Verpolungsschutzelement 4 erforderlich. Beim erfindungsgemäßen Verpolschutz wird hierzu der Arbeitsstrom, der über die senderseitige Wicklung 7 fließt, über die Steuerelektrode des Verpolungsschutzelements geleitet und so der größere Steuerstrom aufgebracht. Im Ausführungsbeispiel nach FIG 1 und FIG 2 dient als Steuerelektrode die Basis eines symmetrischen Doppelemitter (symmetrischer bi-polarer Transistor) -Transistors.

Die Ansteuerschaltung 16 ist dafür ausgelegt, daß bei richtiger Polung durch Ziehen von Strom aus der Basis des Verpolungsschutzelements 4 das Verpolungsschutzelement leitend gesteuert wird. Bei falscher Polung, also bei verpoltem Anschluß der Sendeschaltung 2, zieht die Ansteuerschaltung 16 keinen Strom, sperrt also, so daß das Verpolungsschutzelement 4 nicht leitend gesteuert wird, also sperrt. Weiterhin ist sie daher ausgelegt, daß bei Sendebetrieb, bzw. bei erhöhtem Strombedarf der angeschlossenen Schaltung, einschließlich der Sendeschaltung 2, jeweils der erforderliche Steuerstrom bereitgestellt wird.

Beim Verpolungsschutz nach der Erfindung wird der Kommutierungsstrom als Steuerstrom mit herangezogen. Üblicherweises weist eine Regeleinheit nach Art der Ansteuerschaltung 16 eine Regelträgheit auf, so daß vor positivem bzw. negativem Strom durch das angesteuerte Element ein hochohmiger Zwischenzustand auftritt. Durch die erfindungsgemäße Umleitung des Kommutierungsstroms und das Heranziehen als Steuerstrom, wobei dieser über die Basis des Verpolungsschutzelements 4 geführt wird, das hier als zusteuerndes Element angesehen werden kann, wird dieser Nachteil vermieden. Man vermeidet also durch das Heranziehen des Kommutierungsstroms als zusätzlichen Steuerstrom den hochohmigen Zwischenzustand. Damit erziehlt man eine trägheitslose Ansteuerung. Unter einem symmetrischen Doppelemittertransistor ist also ein symmetrischer Aufbau beispielsweise eines pnp-Bipolartransistors zu verstehen, bei welchem je nach Stromrichtung einer der Emitter zum Kollektor wird. Bezogen auf einen normalen Transistor mit Emitter und Kollektor fließt einmal der Strom im Normalbetrieb und dann im Inversbetrieb.

Besonders symmetrischer Sendebetrieb wird erzielt, wenn das Verpolungsschutzelement 4 als Doppelemittertransistor ausgeführt ist, wie es in FIG 2 veranschaulicht ist. Der Arbeitsstrom vom Sendeventil 12 über die Sendewicklung bzw. Primärwicklung 7 ist wieder über die Steuerelektrode des Verpolungsschutzelementes 4 geführt. Ein symmetrischer Sendebetrieb wird durch zwei Sendeventile 12 und 13 ermöglicht. Der Arbeitsstrom des Sendeventils 12 wird der Steuerelektrode des Verpolungsschutzelements 4 über einen weiteren Ankopplungspfad 18 - ebenso wie nach FIG 1 - zugeführt. Zwei Ventile 14 und 15 sind in einem zum Kondensator 11 parallelen Zweig angeordnet, in dem die Wicklung 7 auf der Information verarbeitenden Seite liegt. Die Wicklung 7 ist zwischen diesen Ventilen angeordnet. Durch diese Ventile 14 und 15 wird die Spule 7 bezogen auf die Sendeventile 12 und 13 im Sendezweig gegenphasig eingeschaltet. Durch die Ventile 14 und 15 ist für die Primärwicklung bzw. Sendewicklung 7 in den Pausen der Sendeimpulse eine Art Freilaufschaltung, jedoch besonderer Art, bereitgestellt, wie es im einzelnen in EP-A-0 379 902 beschrieben ist. Die in der Wicklung auf der Information verarbeitenden Seite gespeicherte Energie wird hierdurch zurückgewonnen und auf die Energie einspeisende Sekundärseite des Wandlers gebracht. Dadurch wird bei einem Bussystem als Leitersystem 3 mit vielen Ankopplungsschaltungen der Wirkungsgrad des Systems erhöht.

## Patentansprüche

1. Verpolschutz zur Ankopplung einer elektrischen Schaltung (2) an ein Energie- und Information führendes Leitersystem (3), wobei wenigstens ein Ankopplungspfad (5) ein steuerbares Element (4) als Verpolschutz umfaßt, **dadurch gekennzeichnet**, daß bei induktiver Ankopplung einer Sendeschaltung (2) an das Leitersystem (3) mittels eines Wandlers (6) der Arbeitsstrom, der über die Wicklung (7) auf der Sendeseite fließt, über die Steuerelektrode des steuerbaren Elements, Verpolungsschutzelement (4) genannt, geleitet ist.

2. Verpolschutz zur Ankopplung einer elektrischen Schaltung (2) an ein Gleichstromenergie und Wechselspannungsinformation führendes Leitersystem (3) wobei wenigstens ein Ankopplungspfad (5) ein steuerbares Element (4) als Verpolschutz umfaßt, wozu dieses Verpolungsschutzelement (4) in Abhängigkeit von der Polarität des Leitersystems (3) den Ankopplungspfad (5) sperrt bzw. freigibt, **dadurch gekennzeichnet**, daß bei induktiver Ankopplung der Sendeschaltung (2) an das Leitersystem (3) durch einen Wandler (6), der in Verbindung mit einem Kondensator (11) als Weiche für Gleichstromenergie und für Wechselspannungsinformation dient, der Arbeitsstrom, der über die als Sendewicklung (7) dienende Wicklung des Wandlers (6) fließt, über die Steuerelektrode des Verpolungsschutzelements (4) geleitet ist, in dem der Kondensator (11) in einer Leitung angeordnet ist, in deren Zug eine Arbeitselektrode, beispielsweise der Emitter, des Verpolschutzelements (4) liegt und ein weiterer Ankopplungspfad (18) für den Sendestrom zur Steuerelektrode des Verpolungsschutzelements (4) geführt ist.

3. Verpolschutz nach Anspruch 1 oder 2,
**dadurch gekennzeichnet**, daß das Verpolungsschutzelement (4) ein symmetrischer Doppel-Emitter-Transistor (17) ist, dessen Steuereingang außer an der Leitung für Sendestrom an eine Ansteuerschaltung (18) gelegt ist.

## Claims

1. Polarity-reversal protection for coupling an electric circuit arrangement (2) to a conductor system (3) which conducts energy and information, wherein at least one coupling path (5) comprises a controllable element (4) as polarity-reversal protection, characterised in that when a transmitting circuit arrangement (2) is inductively coupled to the conductor system (3) by means of a transformer (6) the working current, which flows by way of the winding (7) on the transmitting side, is conducted by way of the control electrode of the controllable element, called polarity-reversal protection element (4).

2. Polarity-reversal protection for coupling an electric circuit arrangement (2) to a conductor system (3) which conducts direct-current energy and alternating-voltage information, wherein at least one coupling path (5) comprises a controllable element (4) as polarity-reversal protection, for which purpose this polarity-reversal protection element (4) blocks or frees the coupling path (5) as a function of the polarity of the conductor system (3), characterised in that when the transmitting circuit arrangement (2) is inductively coupled to the conductor system (3) by means of a transformer (6), which in conjunction with a capacitor (11) is used as a switch for direct-current energy and for alternating-voltage information, the working current, which flows by way of the winding of the transformer (6) that is used as a transmitting winding (7), is conducted by way of the control electrode of the polarity-reversal protection element (4), wherein the capacitor (11) is arranged in a line in whose run there lies a working electrode, for example the emitter, of the polarity-reversal protection element (4), and a further coupling path (18) for the transmitting current is directed to the control electrode of the polarity-reversal protection element (4).

3. Polarity-reversal protection according to claim 1 or 2, characterised in that the polarity-reversal protection element (4) is a symmetrical double-emitter-transistor (17), the control input of which is connected to a driving-control circuit arrangement (18) (sic) in addition to being connected to the line for transmitting current.

## Revendications

1. Protection contre l'inversion de pôles, destinée au couplage d'un circuit électrique (2) à un système (3) de conducteurs véhiculant de l'énergie et de l'information, au moins une voie (5) de couplage comprenant comme protection contre l'inversion de pôles un élément (4) pouvant être commandé, caractérisée qu'en cas de couplage inductif d'un circuit (2) d'émission au système (3) de conducteurs au moyen d'un transformateur (6), le courant de fonctionnement, qui passe par l'enroulement (7) du côté émission, conduit par l'intermédiaire de l'électrode de commande de l'élément pouvant être commandé, appelé élément (4) de protection contre l'inversion des pôles.

2. Protection contre l'inversion de pôles, destinée au couplage d'un circuit électrique (2) à un système (3) de conducteurs véhiculant une énergie en courant continu et une information de tension alternative, au moins une branche (5) de couplage comprenant comme protection contre l'inversion de pôles un élément (4) pouvant être commandé, cet élément (4) de protection contre l'inversion des pôles bloquant ou libérant, en fonction de la polarité du système (3) de conducteurs, la voie (5) de couplage, caractérisée en ce qu'en cas de couplage inductif du circuit (2) d'émission au système (3) de conducteurs par un transformateur (6), qui sert, en liaison avec un condensateur (11) d'aiguillage de l'énergie en courant continu et de l'information en tension alternative, le courant de fonctionnement, qui passe par l'enroulement du transformateur (6) servant d'enroulement (7) d'émission, est conduit par l'intermédiaire de l'électrode de commande de l'élément (4) de protection contre l'inversion des pôles, par le fait que le condensateur (11) est disposé dans une ligne, à la suite de laquelle se trouve une électrode de fonctionnement, par exemple l'émetteur, de l'élément (4) de protection contre l'inversion des pôles, et une autre voie (18) de couplage du courant d'émission est amenée à l'électrode de commande de l'élément (4) de protection contre l'inversion de pôles.

3. Protection contre l'inversion de pôles suivant la revendication 1 ou 2, caractérisée en ce que l'élément (4) de protection contre l'inversion de pôles est un transistor (17) symétrique à émetteur double, dont l'entrée de commande est reliée, outre à la ligne pour le courant d'émission, à un circuit (18) de commande.
